# EUROPÄISCHE PATENTSCHRIFT

(11) **EP 2 994 615 B1**
(45) Veröffentlichungstag und Bekanntmachung des Hinweises auf die Patenterteilung: **30.08.2017**
(21) Anmeldenummer: 14734806.4
(22) Anmeldetag: 01.07.2014
(51) Int. Cl.: F01D 5/06, F01D 5/08, F04D 29/32, F04D 29/58

(54) **ROTOR FÜR EINE THERMISCHE STRÖMUNGSMASCHINE**
ROTOR FOR A THERMAL TURBOMACHINE
ROTOR POUR UNE TURBOMACHINE THERMIQUE

(30) Priorität: 17.07.2013 EP 13176860
(43) Veröffentlichungstag der Anmeldung: 16.03.2016
(73) Patentinhaber: Siemens Aktiengesellschaft, 80333 München (DE)
(72) Erfinder: KOLK, Karsten, 45479 Mülheim an der Ruhr (DE); SCHRÖDER, Peter, 45307 Essen (DE); VEITSMAN, Vyacheslav, 45879 Gelsenkirchen (DE)
(86) Internationale Anmeldenummer: PCT/EP2014/063914
(87) Internationale Veröffentlichungsnummer: WO 2015/007512

(56) Entgegenhaltungen:
- EP-A1- 1 329 591
- DE-A1- 19 617 539
- DE-A1- 19 852 604

## Beschreibung

Die Erfindung betrifft einen Rotor für eine thermische Strömungsmaschine, welcher im Inneren zur Führung eines Mediums ausgebildet ist.

Rotoren für thermische Strömungsmaschinen wie Axialverdichter und Gasturbinen sind aus dem umfangreich vorhandenen Stand der Technik in unterschiedlichen Bauformen bekannt. Beispielsweise sind für Gasturbinen geschweißte Rotoren bekannt, bei denen unterschiedlich breite Trommeln miteinander zu einem monolithischen Rotor verschweißt sind. Andererseits ist es bekannt, mehrere scheibenförmige Elemente - bekannt auch als Rotorscheiben - zu stapeln und diese mit Hilfe einer oder mehrerer Zuganker zu einem festen Gebilde zu verspannen. Selbst Kombinationen dieser Bauformen sind bekannt. An allen Rotoren sind außen Laufschaufel montiert, die bei Gasturbinen beispielsweise entweder dem Verdichter oder der Turbineneinheit zuzuordnen sind. Unabhängig von der Bauform kann über im Rotormantel angeordnete Löcher ein Medium in das Innere der Rotoren eingeleitet werden, um dieses Medium von der Einspeise-Position zu einer zweiten axialen Position zu führen, wo das Medium dem Rotor wieder entnommen wird. Diese Methode wird insbesondere bei Gasturbinen eingesetzt, um Kühlluft dem Hauptströmungspfad des Verdichters einer Gasturbine rotorseitig zu entnehmen und zur Turbineneinheit zu führen, wo sie dann wieder aus dem Rotorinneren herausgeführt zu Kühlluftzwecken und/oder Sperrluftzwecken verwendet werden kann.

Um eine aerodynamisch effiziente Entnahme von Luft aus dem Verdichter einer Gasturbine und eine effiziente Führung der Luft im Rotorinneren zu ermöglichen, sind unterschiedliche Konstruktionen bekannt.

Beispielsweise ist es aus der DE 196 17 539 A1 sowie der DE 198 52 604 A1 bekannt, die wegen der Drehung des Rotors mit 14734806.4

Drall in den Rotorhohlraum einströmende Luft über sich radial erstreckende Rippen zur Rotormitte zu führen. Die Führung bewirkt, dass die Umfangsgeschwindigkeit der aus den Bohrungen austretenden Luft sich mit kleiner werdendem Radius verringert, was eine unzulässig große Drallbildung verhindert. Aus diesem Grunde werden die Rippen als "Deswirler" bezeichnet, was aus dem Englischen abgeleitet ist.

Aufgabe der vorliegenden Erfindung ist die Bereitstellung einer alternativen Lösung, bei der einerseits die Druck- und Strömungsverluste im Rotorinneren weiter reduziert sind und die andererseits eine einfach herzustellende und somit kostengünstige Lösung ist.

Die auf die Erfindung gerichtete Aufgabe wird mit einem Rotor gemäß den Merkmalen des Anspruchs 1 gelöst. Vorteilhafte Ausgestaltungen sind in den abhängigen Ansprüchen angegeben, deren Merkmale gemäß den Rückverweisen miteinander kombiniert werden können.

Die Erfinder haben erkannt, dass im Stand der Technik Strömungsverluste im Bereich der radialen Rippen auftreten können, da diese in Umfangsrichtung eher vergleichsweise weit auseinander stehen und somit an dieser Stelle größere Strömungsquerschnitte für das der Strömungsmaschine entnommene Medium vorhanden sind. Dies gilt umso mehr, da die Strömungspassagen zwischen den bekannten Rippen auch eine vergleichsweise große axiale Ausdehnung aufweisen. Um diesen Nachteil auszuräumen, wird vorgeschlagen, den Strömungsquerschnitt der Strömungspassagen zwischen den Rippen auch axial zu begrenzen. Die axiale Begrenzung soll sich vorzugsweise zumindest über einen Großteil der radialen Ausdehnung der Rippen ausbilden.

Aus diesem Grunde ist ein separat gefertigtes Flügelrad zwischen den Nabenbereichen einander benachbarter Rotorscheiben angeordnet, von denen eine der beiden Rotorscheiben Bohrungen zur Einleitung eines Mediums in das Rotorinnere aufweist, wobei das Flügelrad mit einer ersten Seite an dem Nabenbereich der zweiten Rotorscheibe anliegt und dessen der ersten Seite gegenüberliegende zweite Seite eine Anzahl von Rippen aufweist, die sich von außen nach innen erstrecken.

Im Gegensatz zu den bekannten Lösungen wird mit der Erfindung somit erstmalig vorgeschlagen, dass die Rippen nicht monolithischer Teil eines der beiden Rotorscheiben sind, sondern Teil eines Flügelrades, welches als Rippenträger einen plattenförmigen Ring umfasst, an dem die Rippen befestigt sind.

Mithin lässt sich die vorgenannte Ausgestaltung wesentlich einfacher und kostengünstiger herstellen als Rotorscheiben, bei denen die Rippen integraler Bestandteilt der Rotorscheibe sind. Zudem kann das Flügelrad aus einem anderen Werkstoff hergestellt sein als die Rotorscheibe selber, da die Randbedingungen, beispielsweise die maximalen Einsatztemperaturen, unterschiedlich sein können. Mithin wird die relativ komplexe Geometrie der Rippen einer Rotorscheibe von letzterer getrennt, da von den Erfindern erkannt worden ist, dass die Rippen auch an einem separaten Bauteil - dem Flügelrad - angeordnet sein können. Das Flügelrad kann aus einem vollen Ring mechanisch hergestellt werden. Alternativ kann das Flügelrad auch aus Einzelteilen - einem Ring und mehrere Rippen - durch Schweißen gefügt werden. Bei einer komplexen Geometrie der Rippe bietet sich auch ein Gussverfahren zur Herstellung des Flügelrades an.

Es sei bemerkt, dass sich die Begriffe "axial" und "radial" sowie "außen" und "innen" stets auf die Rotationsachse der Rotorscheibe bzw. des Rotors beziehen. Unter dem Rotorinneren ist zudem derjenige Hohlraum im Inneren des Rotors verstanden, den von den Rotorscheiben begrenzt ist. Mit anderen Worten: Die Bohrungen der ersten Rotorscheibe zählen nicht zum Rotorinneren.

Gemäß einer ersten vorteilhaften Weiterbildung des Flügelrades liegt die äußere Kante des Rippenträgers auf einem größeren Radius als die äußeren Enden der Rippen, so dass im verbauten Zustand, wenn das Flügelrad zwischen den Nabenbereichen der betreffenden Rotorscheiben montiert ist, das aus den Bohrungen austretende Medium wegen des radial weiter nach außen geführten Rippenträgers besser nach innen geleitet werden kann. Verwirbelungen in den Einströmbereichen der Strömungspassagen können somit vermieden werden, was Druckverluste bei der Führung des Mediums verringert.

Bei einer weiteren vorteilhaften Ausgestaltung der Erfindung weist jede der Rippen eine der ersten Rotorscheibe zugewandte Kante auf, deren radiale Kontur zur radialen Kontur der ersten Rotorscheibe im Nabenbereich korrespondiert. Hierdurch kann der Spalt zwischen den Kanten der Rippen und der Nabenkontur der ersten Rotorscheibe über die gesamte radiale Rippenausdehnung vergleichsweise klein gehalten werden, was eine effiziente Führung des Mediums entlang der Rippe ermöglicht, ohne das Querströmungen durch einen von der Rippe und dem Nabenbereich gebildeten Spalt auftreten.

Gemäß einer weiteren vorteilhaften Ausgestaltung ist das Flügelrad gegenüber der zweiten Rotorscheibe gegen eine Relativbewegung in Umfangsrichtung gesichert. Dazu kann das Flügelrad im Rippenträger ein oder mehrere Löcher aufweisen, in denen ein Bolzen sitzt, der in die benachbarte zweite Rotorscheibe in eine Nut eingreift. Alternativ kann das Flügelrad auch mit der zweiten Rotorscheibe verschraubt sein.

Vorzugsweise ist das Flügelrad auf der zweiten Rotorscheibe aufgeschrumpft. Dazu weist das Flügelrad an seiner der zweiten Rotorscheibe zugewandten Seiten einen Ringwulst auf, der seitlich absteht. Insofern ist die Seite dann zwar nicht mehr vollständig eben, aber immerhin rippenlos. Korrespondierend zu dem Ringwulst weist die zweite Rotorscheibe im Nabenbereich einen zylindrischen, nach außen weisenden Sitz auf, auf den der Ringwulst aufgeschrumpft werden kann. Der Schrumpfsitzt bietet eine einfache und zuverlässige Befestigung. Um eine Verschleiß hervorrufende Relativbewegung zwischen zweiter Rotorscheibe und Flügelrad zu vermeiden, können an dem einen der beiden am Schrumpfsitz beteiligten Bauteile Nocken angeordnet sein, die in an den anderen der beiden Bauteile des Schrumpfsitzes angeordneten Ausnehmungen weitestgehend formschlüssig eingreifen. Anstelle der formschlüssigen Nocken-Ausnehmungs-Paarung können auch andere Sicherungen gegen Relativbewegungen, wie beispielsweise eine Sicherungsschraube, verwendet werden.

Besonders bevorzugt ist die Weiterbildung, bei der das Flügelrad an der zweiten Seite radial innen zwischen den Rippen hohlkehlartig zur Umlenkung einer Strömung ausgebildet ist. Dies verringert die aerodynamischen Verluste im Medium, wenn dieses aus einer hauptsächlich radial gerichteten Strömung in eine in hauptsächlich axial gerichtete Strömungsrichtung umgelenkt werden muss. Dies gilt selbstverständlich auch für eine umgekehrte Strömungsrichtung.

Insgesamt ergeben sich mit der Erfindung mehrere Vorteile: Zuerst ist die Vereinfachung der Fertigung, d.h. die Reduzierung potentieller Fertigungsfehler durch Verringerung der Bauteilkomplexität anzugeben. Zudem sind die komplexen Geometrien nicht mehr an den vergleichsweise teureren Bauteilen - den Rotorscheiben - angeordnet, sondern werden an einem separat gefertigten Bauteil - dem Flügelrad - realisiert. Die Trennung der komplexen Geometrien führt zudem zu einer Kostenreduzierung derjenigen Rotorscheibe, mit der die Entnahme des Mediums aus dem Hauptströmungspfad realisiert ist. Die andere, die zweite Rotorscheibe kann klassisch ausgeführt werden, da das Flügelrad die Funktion der verbesserten Strömungsführung im Inneren des Rotors übernimmt. Durch die strukturelle Trennung können unterschiedliche Werkstoffe eingesetzt und kombiniert werden.

Die Erfindung betrifft somit insgesamt einen Rotor für eine thermische Strömungsmaschine, insbesondere eine Gasturbine, der ausgestaltet ist, in seinem Inneren ein Medium, beispielsweise Verdichterluft, zu führen. Um dieses Medium strömungsverlustarm im Inneren zu führen und um gleichzeitig einen vergleichsweisen einfach sowie kostengünstig herstellbaren Rotor anzugeben, ist vorgesehen, dass zwischen den einander benachbarten Nabenbereichen der beiden Rotorscheiben ein separat gefertigtes Flügelrad angeordnet ist, dessen ebene, erste Seite an dem Nabenbereich der zweiten Rotorscheibe anliegt und dessen der ersten Seite gegenüberliegende zweite Seite eine Anzahl von Rippen aufweist, die sich von außen nach innen erstrecken.

Weitere Vorteile und Merkmale der Erfindung werden anhand eines einzigen Ausführungsbeispieles erläutert.

Es zeigen:
- Figur 1: einen Längsschnitt durch einen Läufer einer Strömungsmaschine,
- Figur 2: einen Ausschnitt durch den Längsschnitt eines erfindungsgemäßen Rotors einer Strömungsmaschine mit einem zwischen zwei Rotorscheiben angeordneten Flügelrad,
- Figur 3: das Flügelrad in perspektivischer Darstellung,
- Figur 4: einen Schrumpfsitz des Flügelrades auf der zweiten Rotorscheibe im Querschnitt,
- Figur 5: einen Ausschnitt aus dem Nabenbereich der zweiten Rotorscheibe in geschnittener, perspektivischer Darstellung und
- Figur 6: die Rückseite des Flügelrads in perspektivischer Darstellung.

In allen Figuren sind identische Merkmale mit den gleichen Bezugszeichen versehen.

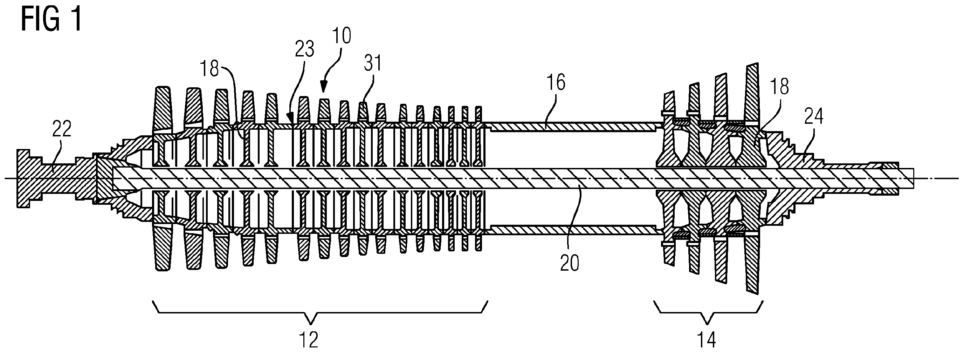

Figur 1 zeigt den prinzipiellen schematischen Aufbau eines Rotors 10 einer thermischen Strömungsmaschine, die im montierten zustand um ihre Rotationsachse 13 drehbar gelagert ist. Im gezeigten Ausführungsbeispiel handelt es sich um den Rotor 10 einer stationären Gasturbine. Der Rotor 10 könnte auch in einer Flugzeug-Gasturbine Verwendung finden. Aufgrund des Einsatzes in einer Gasturbine umfasst der Rotor 10 einen Verdichterabschnitt 12 und einen Turbinenabschnitt 14. Zwischen den beiden Abschnitten 12, 14 ist ein Rohr 16 vorgesehen. Sowohl der Verdichterabschnitt 12 als auch der Turbinenabschnitt 14 sind in Scheibenbauart ausgeführt. Der Verdichterabschnitt 12 umfasst im gezeigten Ausführungsbeispiel sechzehn Rotorscheiben 18 und der Turbinenabschnitt 14 vier Rotorscheiben 18. Durch alle Rotorscheiben 18 und das Rohr 16 erstreckt sich ein Zuganker 20, an dessen beiden Enden eine sogenannte vordere Hohlwelle 22 und eine sogenannte hintere Hohlwelle 24 aufgeschraubt sind. Die beiden Hohlwellen 22, 24 verspannen sämtliche Rotorscheiben 18 und das Rohr 16 miteinander, so dass Relativbewegungen in Umfangsrichtung weitestgehend vermieden werden. Im Detail wird dieses durch an den Kontaktflächen 23 angeordnete Hirth-Verzahnungen. Diese sind jedoch nicht weiter dargestellt.

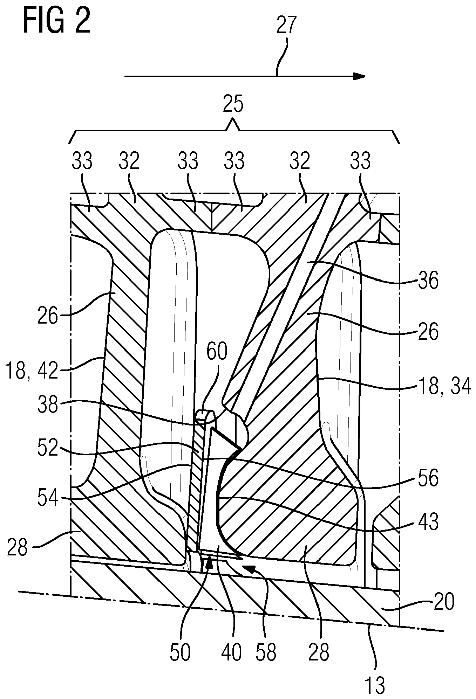

Die erfindungsgemäßen Merkmale sind in Figur 1 nicht dargestellt. Hierzu wird auf Figur 2 verwiesen, die einen Ausschnitt von zwei beliebigen, jedoch ein Scheibenpaar 25 bildende Rotorscheiben 18 des Verdichterabschnitts 12 aus Figur 1 vergrößert darstellen.

Außerhalb des Rotors 10 strömt im Betriebszustand in einem nicht weiter dargestellten Hauptströmungspfad als Medium Luft in Pfeilrichtung 27, die vom Verdichter währenddessen komprimiert wird.

Jede Rotorscheibe 18 weist einen sich um die Rotationsachse 13 endlos umlaufenden Scheibensteg 26 auf. Der Scheibensteg 26 weist an seinem radial inneren Ende einen Nabenbereich 28 mit einer zur Rotationsachse konzentrischen zentralen Öffnung 30 und an seinem radial äußeren Ende einen Kranzbereich 32 auf. Der Kranzbereich dient zur Befestigung von Laufschaufeln 31 (Figur 1) und umfasst beidseitig angeordnete Kragen 33, an denen die benachbarten Rotorscheiben 18 aneinander liegen. Die in Figur 2 rechts dargestellte Rotorscheibe 18 wird nachfolgend als erste Rotorscheibe 34 bezeichnet, die links dargestellte als zweite Rotorscheibe 42. Die erste Rotorscheibe 34 weist zudem sich durch den Scheibensteg 26 vom Kranzbereich nach innen erstreckende Bohrungen auf, die entlang des Umfangs des Scheibenstegs 26 gleichmäßig verteilt sind. Von den Bohrungen ist lediglich eine dargestellt und mit dem Bezugszeichen 36 beschriftet. Die Bohrungen 36 sind derartig gegenüber der Radialrichtung geneigt, dass sie den Scheibensteg 26 von der einen Seite zu der anderen Seite durchdringen. Die Bohrungen 36 münden mit ihrem radial inneren Ende in einer Ringfläche 38, welche schräg zur Radialrichtung der Rotorscheibe 34 angeordnet ist.

Zwischen den beiden Nabenbereichen 28 der unmittelbar benachbarten Rotorscheiben 34, 42 ist ein Flügelrad 50 angeordnet. Das Flügelrad 50 umfasst einen plattenförmigen Rippenträger 52 mit einer ersten Seite 54, die nahezu eben ausgestaltet ist, und mit einer der ersten Seite 54 gegenüber liegenden zweiten Seite 56.

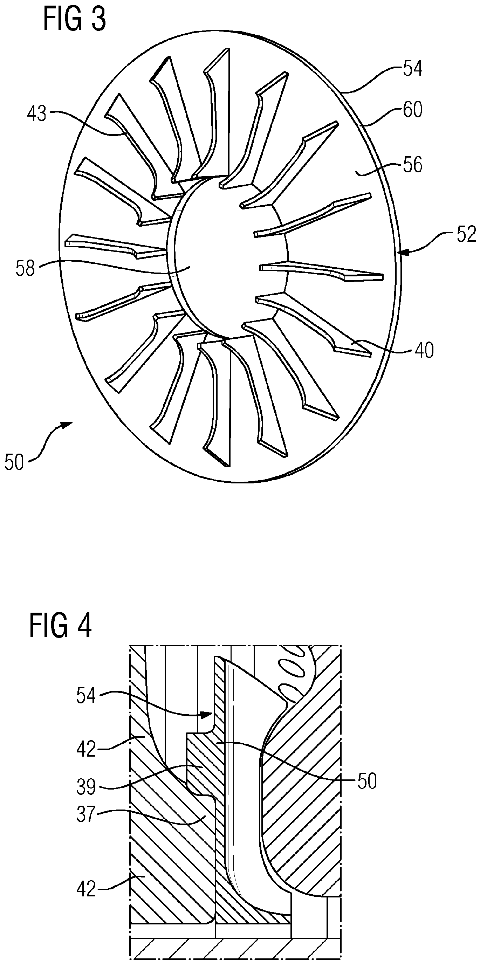

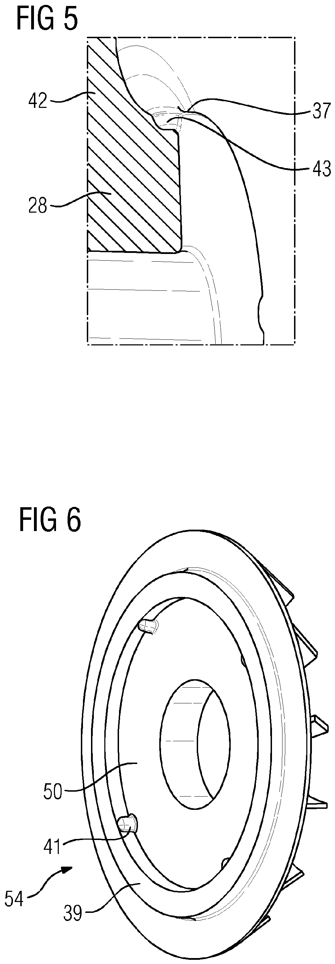

Das Flügelrad 50 sitzt, wie in Figur 4 dargestellt, auf einem zylindrischen Abschnitt 37 des Nabenbereichs 28 der zweiten Rotorscheibe 42. Dazu umfasst das Flügelrad 50 auf seiner ersten Seite 54 einen Ringwulst 39, welcher in Figur 6 vollständig dargestellt ist. An der Innenseite der Ringwulst 39 sind gemäß dem gezeigten Ausführungsbeispiel vier entlang des Umfangs gleichmäßig verteilte Nocken 41 vorgesehen. Diese greifen bei aufgeschrumpftem Flügelrad 50 in Ausnehmungen 43 (Figur 5) ein, welche im Nabenbereich 28 der zweiten Rotorscheibe 42 sowohl radial nach außen als auch seitlich, nicht aber in Umfangsrichtung geöffnet sind. Gleichzeitig liegt die innerhalb der Ringwulst 39 angeordnete Fläche der ersten Seite 54 flächig am seitlichen Nabenbereich 28 an. Somit ist das Flügelrad 50 nur teilweise aufgeschrumpft.

An der zweiten Seite 56 sind entlang des Umfangs gleichmäßig Rippen 40 (Figur 3) verteilt. Diese dienen als Leitelemente für aus den Bohrungen 36 austretende Luft. Sie können dabei geradlinig oder auch leicht gewölbt sich von außen nach innen in Radialrichtung oder auch geringfügig dazu geneigt erstrecken. Jede dem Nabenbereich 28 der ersten Rotorscheibe 34 zugewandte Kante 43 der Rippen 40 ist so konturiert, dass deren radiale Kontur zur radialen Kontur der ersten Rotorscheibe 34 korrespondiert. Dennoch befindet sich jeweils ein geringfügiger Spalt zwischen den Kanten 43 und dem Nabenbereich 28, um Verschleiß zu verhindern. Ebenso wie die anderen Rotorscheiben 18 weist auch das Flügelrad 50 eine zentrale Öffnung 58 auf, durch die sich der Zuganker 20 erstrecken kann.

Die Rippen 40 sind so ausgebildet, dass diese radial außen unmittelbar innerhalb der Ringfläche 38 enden. Um eine zuverlässige und strömungsverlustarme Einströmung der aus den Bohrungen 36 austretenden Luft in die zwischen den Rippen 40 vorhandenen Strömungpassagen zu gewährleisten, liegt die äußere Kante 60 des Rippenträgers 52 auf einem größeren Radius als die äußeren Enden der Rippen 40 - bezogen auf die Rotationsachse 13.

Die Rippen 40 dienen zur Strömungsführung und zur Entdrallung der aus den Bohrungen 36 strömenden Luft, die in das Innere des Rotors 10 einströmen sollen. An derjenigen Seite der ersten Rotorscheibe 34, an der die Rippen 40 vorgesehen sind, grenzt eine zweite Rotorscheibe 42 an. Wegen der Verwendung des Flügelrads 50 kann die zweite Rotorscheibe 42 im Nabenbereich 28 konventionell ausgeführt sein.

Durch die Verwendung des Flügelrads 50 können die Strömungspassagen über die gesamte radiale Ausdehnung der Rippen 40, in der die aus den Bohrungen 36 austretende Kühlluft eintritt und bis zum Zuganker 20 geführt wird, axial begrenzt werden. Dies vermeidet Verwirbelungen der Luft am Eintritt jeder Strömungspassage, was die Effizient der Luftführung verbessert.

Da die zentralen Öffnungen 30 der Rotorscheiben 18 größer sind als der Durchmesser des Zugankers 20, bilden sich Ringräume zwischen den jeweiligen Nabenbereichen 28 und dem Zuganker 20 aus, durch die die zum Zuganker 20 geführte Luft in axialer Richtung entlang des Zugankers 20 vom Verdichterabschnitt 12 zum Turbinenabschnitt 14 geführt werden kann.

Selbstverständlich kann das voran beschriebene Scheibenpaar 25 mit dem zwischengeschalteten Flügelrad 50 auch genutzt werden, um die entlang des Zugankers 20 geführte Luft nach außen zu führen, wie es bei Rotorscheiben 18 im Turbinenabschnitt 14 erforderlich ist.

## Patentansprüche

1. Rotor (10) für eine thermische Strömungsmaschine,
mit zumindest einem Paar (25) unmittelbar benachbarter Rotorscheiben (18),
wobei jede Rotorscheibe (18) einen um ihre Rotationsachse endlos umlaufenden Scheibensteg (26) aufweist, der an seinem - bezogen auf die Rotationsachse (13) - radial inneren Ende einen gegenüber dem Scheibensteg (26) axial verbreiterten Nabenbereich (28) mit einer zur Rotationsachse (13) konzentrischen zentralen Öffnung (30) und der an seinem radial äußeren Ende einen axial verbreiterten Kranzbereich (32) zur Anlage an der benachbarten Rotorscheibe (18, 34, 42) und zur Aufnahme von Laufschaufeln (31) aufweist,
wobei die erste (34) der beiden Rotorscheiben eine Vielzahl von entlang des Umfangs verteilten, vom Kranzbereich (32) aus sich nach innen erstreckende, den Scheibensteg (26) durchdringende Bohrungen (36) aufweist, die in einer schräg zur Radialrichtung angeordneten Ringfläche (38) der Rotorscheibe (34) münden,
**dadurch gekennzeichnet, dass** zwischen den einander benachbarten Nabenbereichen (28) der beiden Rotorscheiben (34, 42) ein Flügelrad (50) angeordnet ist, dessen erste Seite (54) an dem Nabenbereich (28) der zweiten Rotorscheibe (42) anliegt und dessen der ersten Seite (54) gegenüberliegenden zweiten Seite (56) eine Anzahl von Rippen (40) aufweist, die sich von radial außen nach radial innen erstrecken.

2. Rotor (10) nach Anspruch 1,
bei dem das Flügelrad (50) einen plattförmigen Rippenträger (52) umfasst, dessen äußere Kante (60) auf einem größeren Radius liegt als die äußeren Enden der Rippen (40).

3. Rotor (10) nach Anspruch 1 oder 2,
bei dem jede der Rippen (40) eine der ersten Rotorscheibe (34) zugewandte Kante (43) aufweist, deren radiale Kontur zur radialen Kontur der ersten Rotorscheibe (34) korrespondiert.

4. Rotor (10) nach Anspruch 1, 2 oder 3,
bei dem das Flügelrad (50) an der zweiten Rotorscheibe (42) befestigt ist.

5. Rotor (10) nach Anspruch 4,
bei dem das Flügelrad über einen Schrumpfsitz an der zweiten Rotorscheibe befestigt ist.

6. Rotor nach Anspruch 4 oder 5,
bei dem das Flügelrad (50) gegenüber der zweiten Rotorscheibe (42) gegen eine Relativbewegung in Umfangsrichtung gesichert ist.

7. Rotor nach Anspruch 6,
bei dem die zweite Rotorscheibe (42) im Nabenbereich zumindest eine umfangsseitig begrenzte Ausnehmung aufweist, in die ein dazu korrespondierender, am Flügelrad angeordneter Nocken eingreift.

8. Rotor (10) nach einem der vorangehenden Ansprüche, bei dem das Flügelrad (50) an der zweiten Seite (56) radial innen zwischen den Rippen (40) hohlkehlartig zur Umlenkung einer Strömung ausgebildet ist.

## Claims

1. Rotor (10) for a thermal turbomachine, having at least one pair (25) of immediately adjacent rotor disks (18),
each rotor disk (18) having a disk web (26) which runs endlessly around its rotational axis and, at its radially inner end in relation to the rotational axis (13), has a hub region (28) which is widened axially with respect to the disk web (26) with a central opening (30) which is concentric with respect to the rotational axis (13), and which has, at its radially outer end, an axially widened rim region (32) for bearing against the adjacent rotor disk (18, 34, 42) and for receiving rotor blades (31),
the first (34) of the two rotor disks having a multiplicity of bores (36) which are distributed along the circumference, extend inward from the rim region (32), penetrate the disk web (26), and open in a ring face (38) of the rotor disk (34), which ring face (38) is arranged obliquely with respect to the radial direction,
**characterized in that**
an impeller wheel (50) is arranged between the mutually adjacent hub regions (28) of the two rotor disks (34, 42), the first side (54) of which impeller wheel (50) bears against the hub region (28) of the second rotor disk (42), and the second side (56) of which impeller wheel (50) which lies opposite the first side (54) has a number of ribs (40) which extend radially inward from the radial outside.

2. Rotor (10) according to Claim 1,
in which the impeller wheel (50) comprises a plate-shaped rib carrier (52), the outer edge (60) of which lies on a larger radius than the outer ends of the ribs (40).

3. Rotor (10) according to Claim 1 or 2,
in which each of the ribs (40) has an edge (43) which faces the first rotor disk (34) and the radial contour of which corresponds to the radial contour of the first rotor disk (34).

4. Rotor (10) according to Claim 1, 2 or 3,
in which the impeller wheel (50) is fastened to the second rotor disk (42).

5. Rotor (10) according to Claim 4,
in which the impeller wheel is fastened to the second rotor disk via a shrink fit.

6. Rotor according to Claim 4 or 5,
in which the impeller wheel (50) is secured against a relative movement in the circumferential direction with respect to the second rotor disk (42).

7. Rotor according to Claim 6,
in which the second rotor disk (42) has at least one recess which is delimited on the circumferential side in the hub region, into which recess a cam engages which corresponds to it and is arranged on the impeller wheel.

8. Rotor (10) according to one of the preceding claims,
in which the impeller wheel (50) is of hollow channel-like configuration on the second side (56) radially on the inside between the ribs (40) in order to deflect a flow.

## Revendications

1. Rotor (10) pour une turbomachine thermique, comprenant au moins une paire (25) de disques (18) rotoriques directement voisins,
dans lequel chaque disque (18) rotorique a une entretoise (26), qui fait le tour sans fin autour de son axe de rotation, qui a, à son extrémité intérieure radialement - rapporté à l'axe (13) de rotation - une partie (28) de moyeu élargie axialement par rapport à l'entretoise (26) et ayant une ouverture (30) centrale concentrique à l'axe de rotation et qui a, à son extrémité extérieure radialement, une partie (32) de couronne élargie axialement, pour l'application au disque (18, 34, 42) rotorique voisin et pour la réception d'aube (31) mobile,
dans lequel le premier (34) des deux disques rotoriques a une pluralité de trous (36), qui sont répartis sur le pourtour, qui s'étendent de la partie (32) de couronne vers l'intérieure, qui traversent l'entretoise (26) et qui débouchent dans une surface (38) annulaire inclinée par rapport à la direction radiale,
**caractérisé en ce que**
entre les parties (28) de moyeu voisines l'une de l'autre des deux disques (34, 42) rotoriques, est montée une roue (50) à aube dont le premier côté s'applique à la partie (28) de moyeu du deuxième disque (42) rotorique et dont le deuxième côté (56), opposé au premier côté (54), a un certain nombre de nervures (40), qui s'étendent de l'extérieur radialement à l'intérieur radialement.

2. Rotor (10) suivant la revendication 1,
dans lequel la roue (50) à aube comprend un support (52) à nervures en forme de plaque, dont le bord (60) extérieur est sur un rayon plus grand que les extrémités extérieures des nervures (40).

3. Rotor (10) suivant la revendication 1 ou 2,
dans lequel chacune des nervures (40) a un bord (43), qui est tourné vers le premier disque (34) rotorique et dont le contour radial correspond au contour radial du premier disque (34) rotorique.

4. Rotor (10) suivant la revendication 1, 2 ou 3,
dans lequel la roue (50) à aube est fixée au deuxième disque (42) rotorique.

5. Rotor (10) suivant la revendication 4,
dans lequel la roue à aube est fixée au deuxième disque rotorique par un ajustement fretté.

6. Rotor suivant la revendication 4 ou 5,
dans lequel la roue (50) à aube est empêchée d'avoir un mouvement relatif dans la direction périphérique par rapport au deuxième disque (42) rotorique.

7. Rotor suivant la revendication 6,
dans lequel le deuxième disque (42) rotorique a, dans la région du moyeu, au moins un évidement, qui est délimité du côté périphérique et dans lequel pénètre un bossage qui y correspond et qui est disposé sur la roue à aube.

8. Rotor (10) suivant l'une des revendications précédentes, dans lequel la roue (50) à aube est, du deuxième côté (56), radialement à l'intérieur entre les nervures (40), constituée en forme de gorge pour la déviation d'un écoulement.
